**Europäisches Patentamt**

**European Patent Office**

**Office européen des brevets**

(19)

(11) Veröffentlichungsnummer: **0 088 230**
A2

(12) ## EUROPÄISCHE PATENTANMELDUNG

(21) Anmeldenummer: **83100965.9**

(22) Anmeldetag: **02.02.83**

(51) Int. Cl.³: **G 01 N 27/84,** G 01 N 21/91

(30) Priorität: **05.03.82 DE 3208041**

(43) Veröffentlichungstag der Anmeldung: **14.09.83**
**Patentblatt 83/37**

(84) Benannte Vertragsstaaten: **AT BE CH DE FR GB IT LI LU NL SE**

(71) Anmelder: **Feldmühle Aktiengesellschaft,**
**Fritz-Vomfelde-Platz 4, D-4000 Düsseldorf 11 (DE)**

(72) Erfinder: **Farwick, Gerhard, D-4817 Leopoldshöhe 1 (DE)**
Erfinder: **Haubold, Wolfgang, Kollwitzstrasse 73,**
**D-4800 Bielefeld (DE)**

(74) Vertreter: **Uhlmann, Hans, Dr. rer.nat., Dipl.-Chem.,**
**Gladbacher Strasse 189, D-4060 Viersen 1 (DE)**

(54) **Verfahren zum Prüfen von ferromagnetischen Werkstücken.**

(57) Das Prüfen von ferromagnetischen Werkstücken, wie Stahlknüppeln, auf Risse oder Einschlüsse erfolgt mittels des Magnetpulververfahrens unter zusätzlicher Anwendung der optischen Prüfung mittels eines fliegenden Lichtpunktes. Das Magnetpulver enthält einen fluoreszierenden Farbzusatz, der bei der Abtastung mit dem fliegenden Lichtpunkt ein fluoreszierendes Licht aussendet, das von einem fotoelektrischen Wandler empfangen, in Impulse übersetzt und einer Auswertestufe zugeführt wird. Der fliegende Lichtpunkt wird als ellipsenförmig verstreckter Lichtfleck erzeugt, der, bezogen auf seine Ellipsenachse unter einem konstanten Winkel über das zu prüfende Werkstück geführt wird. Dieser Winkel wird vor jedem Abtastzyklus in einer Dunkelphase auf einen anderen Wert eingestellt, wobei jeder Bereich des Werkstückes in jeder Winkelstellung einmal abgetastet wird. Die vom fotoelektrischen Wandler abgegebenen Analogsignale werden in der Auswertestufe rechnerisch untersucht, digitalisiert, in einen Speicher eingeschrieben und ausgewertet.

0088230

Verfahren zum Prüfen von ferromagnetischen
Werkstücken.

Die Erfindung betrifft ein Verfahren zum Prüfen von
ferromagnetischen Werkstücken, insbesondere Stahlknüppeln, auf Risse, sowie Einschlüsse mittels eines
fliegenden Lichtpunktes, wobei auf die zu prüfenden
Stahlknüppel ein mit einem fluoreszierenden Farbzusatz
versehenes Magnetpulver so aufgetragen ist, das
dieses an den Stellen der Werkstücke, die Risse
und/oder Einschlüsse aufweisen, Pulverraupen bildet,
die bei der Abtastung mit dem fliegenden Lichtpunkt
ein fluoreszierendes Licht aussenden, das über einen
fotoelektrischen Wandler empfangen, in Impulse übersetzt und einer Auswertestufe zugeführt wird.
Nach dem erfindungsgemäßen Verfahren kann eine Vielzahl von Gegenständen gleicher Form geprüft werden,
wobei die einzige Voraussetzung ist, daß sie hintereinander in einer Reihe gefördert werden müssen.

Ein Beispiel für solche ferromagnetischen Werkstücke
sind Stahlknüppel. Die Erfindung wird daher im weiteren am Beispiel der Stahlknüppelprüfung erläutert,
ohne sie jedoch darauf zu beschränken.

Das Aufbringen des Magnetpulvers, d.h. eines Eisen-
oder Eisenoxidpulvers auf die Stahlknüppel, erfolgt
nach dem bekannten Verfahren der Magnetpulverprüfung,

0088230

d.h., daß die Knüppel in ein magnetisches Feld gebracht werden, wobei die Feldlinien den Stahlknüppel durchsetzen. Risse oder Schlackeneinschlüsse unterhalb der Oberfläche führen zu einem Herausdrängen der Feldlinie, so daß feines Magnetpulver, das über die Oberfläche geblasen oder geschwemmt wird, an diesen Fehlerstellen Raupen bildet. Übliches Magnetpulver besteht aus Eisen oder Eisenoxid von schwarzer oder roter Farbe. Der Kontrast dieser Pulver auf den zum Teil stark verzunderten Stahlknüppeln ist jedoch nur gering, so daß bereits vorgeschlagen wurde, dem Magnetpulver fluoreszierende Zusätze beizumischen, die z.B. im UV-Licht gelb/grün aufleuchten. Das so entstandene Magnetpulverbild konnte fotografisch festgehalten werden, wurde aber in der Mehrzahl der Fälle mit Kontrastfarben gekennzeichnet, um ein Aussondern der fehlerhaften Stücke zu ermöglichen. Diese Aussonderung konnte jedoch nicht vollautomatisch erfolgen. Es blieb vielmehr dem persönlichen Empfinden des Kontrolleurs überlassen, welche Werkstücke er als gut, als ausbesserungsbedürftig oder als Ausschuß betrachtete. Da diese Inspektion, beispielsweise bei Stahlknüppeln, an allen vier Seiten erfolgen muß, ist sie sehr zeitaufwendig und, wie bereits erwähnt, auch immer vom persönlichen Empfinden und damit auch vom menschlichen Versagen abhängig.

Aufgabe der vorliegenden Erfindung ist daher, ein Verfahren vorzuschlagen, das eine Automatisierung der Magnetpulverprüfung ermöglicht, damit die Prüfgeschwindigkeit erhöht, die menschliche Unzulänglichkeit bei der Prüfung ausschaltet und die Prüfung nach festgelegten, frei wählbaren Parametern gestattet.

Gelöst wird diese Aufgabe durch ein Verfahren, das durch die Kombination folgender Merkmale gekennzeichnet ist:

Der zur Abtastung benutzte Lichtfleck ist ellipsenförmig verstreckt,

die Verstreckungsrichtung des Lichtfleckes verläuft während eines Abtastzyklus des Stahlknüppels unter einem konstanten Winkel $\alpha$ , zu dessen Längsachse,

der Winkel $\alpha$ wird vor jedem Abtastzyklus in einer diesem vorgeschalteten Dunkelphase auf einen anderen Wert eingestellt,

die sich aus der Abtastung im fotoelektrischen Wandler ergebenden Analogsignale werden in der Auswertestufe

a) rechnerisch untersucht,

b) einer Schwellwertstufe zugeführt und digitalisiert,

c) die Position in X und Y-Achse festgehalten,

d) in einen Speicher eingeschrieben und

e) ausgewertet.

Abtastaggregate, die mit einem fliegenden Lichtpunkt arbeiten, sind darauf angewiesen, daß der Unterschied der reflektierten Strahlung zwischen fehlerfreier und fehlerhafter Oberfläche möglichst groß ist. Die Lichtpunkte sind daher im allgemeinen sehr klein gehalten und liegen im Bereich von einem mm². Fehler, die gleich oder größer wie der abtastende Lichtfleck sind, ergeben daher ein sehr starkes Signal, wohingegen kleine Fehler, wie z.B. Haarrisse, die nur einen Bruchteil des Abtastlichtfleckes flächenmäßig einnehmen, auch nur zu einem Bruchteil des möglichen Impulses führen. Durch Verstrecken des runden Lichtfleckes zu einer Ellipse,

- 4 -

0088230

wird bei gleichem Flächeninhalt des Lichtfleckes
eine größere Fehlerfläche erfaßt, d.h. daß sich ein
stärkerer Kontrast und damit ein stärkerer Fehlerimpuls ergibt.

Bei der Rissprüfung von Werkstücken, wie beispielsweise Stahlknüppeln, ist aber nicht vorhersehbar,
in welcher Richtung die Risse im Knüppel verlaufen.
Es wäre also denkbar, daß der ellipsenförmig verstreckte Lichtfleck gerade senkrecht zu dem Riß
verläuft, der gefunden werden soll. Dadurch ergäbe
sich ein minimaler Kontrast, der praktisch als
Impuls nicht auswertbar ist. Die Verstreckungsrichtung des Lichtfleckes, der während eines Abtastzyklus konstant unter einem bestimmten Winkel
$\alpha$ zur Längsachse des Stahlknüppels verläuft, wird
deshalb jeweils vor Beginn des Abtastzyklusses in
der Dunkelphase auf einen anderen Wert eingestellt,
d.h., daß der Lichtfleck nach mehreren Abtastzyklen
zumindest einen Halbkreis beschrieben hat. Die
Anzahl der Verstellungen die erforderlich sind, um
diesen Halbkreis zu erhalten, richtet sich einmal
nach der Abtastgeschwindigkeit, da erforderlich
ist daß der Abtaststrahl den Fehler mehrfach überstreicht, wenn eine halbkreisförmige Abtastung gewährleistet werden soll, zum anderen nach der Feinheit der Fehler, die noch erfaßt werden müssen.
Zweckmäßig liegt der Winkel zwischen lo und 6o Grad,
d.h., daß 3 bis 18 Schaltungen und damit auch Abtastzyklen zur sicheren Erfassung eines auch sehr
feinen Risse ausreichen. Die Drehzahl des Spiegelrades, durch welches der abtastende Lichtfleck über
die Prüffläche bewegt wird, ist dabei so gewählt,
daß unter gleichem Winkel verlaufende, aufeinanderfolgende, verstreckte Lichtflecke sich berühren,
bzw. leicht überschneiden. Sie ist also in erheblichem Maße von der Vorschubgeschwindigkeit der Stahlknüppel abhängig und liegt bei einer Vorschubgeschwindigkeit von 9o m/min, einer Lichtfleckbreite von 1,5 mm, bei Einsatz eines Spiegelrades mit 12 Spiegeln bei 5ooo U/min.

In der Auswertestufe werden die eingehenden Analogsignale rechnerisch untersucht. Beispielsweise wird die Ausdehnung des Fehlers in der X- und in der Y-Achse ermittelt, woraus sich die gesamte Fehlerfläche ergibt. Besonders wichtig ist aber die rechnerische Untersuchung der Amplitudenhöhe und die Festhaltung des Maximalwertes der Amplitude, da aus der Amplitude die Fehlertiefe hervorgeht. Die Schwellwertstufe gestattet dabei ein Einstellen der Empfindlichkeit, d.h., daß das durch die unregelmäßige Oberfläche der Stahlknüppel verursachte Grundrauschen abgeschnitten wird, gleichzeitig können damit tolerierbare Kleinfehler ausgeblendet werden. Die in die Auswertestufe eingehenden Signale werden in einen Speicher eingeschrieben, der zweckmäßig als first-in-first-out-Speicher ausgebildet ist. Dieser Speicher wird von einer mikroprozessorgesteuerten Elektronik rasterförmig ausgelesen. Die dabei erhaltenen Ergebnisse können sowohl ausgedruckt als auch auf einem Monitor sichtbar gemacht werden, wobei das Wesentlichste die Positionsangabe, d.h. die Lage des Fehlers in der X- und Y-Achse und seine absolute Länge ist. Dem Drucker ist also beispielsweise die Angabe zu entnehmen, daß in 12o mm Entfernung von der Einlaufkante und 3o mm Entfernung von der rechten Werkstückkante sich auf 8o mm Länge ein Riß mit einer Tiefe von max. 4 mm erstreckt. Diese Information wird jedoch nicht nur an den Drucker gegeben, sondern gleichzeitig an Relaiskontakte, die üblicherweise als potentialfreie Relaiskontakte ausgeführt sind und mit denen die Steuerung nachgeschalteter Aggregate vorgenommen werden kann.

Der vorbeschriebene Fehler führt noch nicht dazu, daß der Stahlknüppel als Ausschuß betrachtet werden muß und in den Schmelzofen zurückgeführt werden sollte. Fehler dieser Art werden üblicher-weise durch einen Vorgang beseitigt, der mit Abschälen bezeichnet wird. Dabei wird der Bereich des Stahlknüppels, der den Riß aufweist, bis zur Rißtiefe abgeschliffen. Die Relaiskontakte können damit zur Steuerung der nachgeschalteten Schleifmaschine dienen, d.h. daß die Angaben für die Steuerung direkt aus dem Speicher über den Mikroprozessor abgerufen werden.

Eine vorteilhafte Ausgestaltung der Erfindung sieht vor, daß die ermittelte Fehlerlänge oder Fehlerfläche mit freiwählbaren Parametern verglichen wird. Bei der Ermittlung von Rissen können in den meisten Fällen Risse unter 5 mm toleriert werden, wodurch bereits ca. 80% der Knüppel als Gutware die Sortiervorrichtung passieren und nicht mehr nachgearbeitet oder rückgeführt werden müssen. Bei Einschlüssen in Knüppel werden die magnetischen Feldlinien ebenfalls unterbrochen, d.h., daß auch diese Einschlüsse angezeigt werden und damit erfaßt werden können.

Die Prüfung der Werkstücke wird bevorzugt mit einer Vorrichtung durchgeführt, die aus einer Lichtquelle, insbesondere einem Laserstrahler zur Erzeugung eines parallelen Lichtstrahles mit kleinem Durchmesser und hoher Energie, einem rotierenden Polygon zur Ablenkung Lichtstrahles über die zu prüfenden Werkstücke, einem fotoelektrischen Wandler zur Aufnahme des von den Werkstücken reflektierten Lichtes und Umwandlung dieses Lichtes in elektrische Impulse, sowie einer Auswertestufe zur Untersuchung, Aufschlüsselung und dem Vergleich der erhaltenen Signale mit vorgegebenen Werten durchgeführt. Die Vorrichtung ist dadurch gekennzeichnet, daß zwischen der Lichtquelle und dem rotierenden Polygon ein optisches System zur Aufteilung und Verstreckung des Lichtstrahles angeordnet ist. Zweckmäßig besteht dieses optische System aus hintereinandergeschalteten Spiegeln zur Strahlaufteilung, wobei jedem Spiegel mindestens ein Prisma zur Längsverstreckung des durch den Strahl gebildeten Abtastlichtfleckes zugeordnet ist.

Die teildurchlässigen Spiegel sind dabei so angeordnet und ausgewählt, daß jeder abgelenkte Teilstrahl die gleiche Lichtintensität besitzt. Die ursprüngliche Verteilung der Lichtintensität auf der gesamten Fläche bleibt dadurch erhalten, wenn auch die Lichtintensität als solche entsprechend der Anzahl der Spiegel und damit der erzeugten Abtastlichtflecke reduziert wird. Werden also beispielsweise für das Prüfen einer Materialbahn 4 Lichtflecke benötigt, die zueinander um jeweils 45 Grad versetzt sind, so muß jeder der erforderlichen Spiegel 25% des zur Verfügung stehenden Lichtes reflektieren. Als Lichtquelle wird dabei im allgemeinen ein Laserstrahler eingesetzt, weil sich dadurch ein praktisch parallelgerichtetes Licht ergibt, das eine hohe Intensität aufweist. Der erste Spiegel muß in diesem Falle 25% des auf ihn auftreffenden Lichtes reflektieren, sein Verhältnis Reflektion zur Transmission beträgt also 25 : 75. Beim zweiten Spiegel beträgt das Ver-

hältnis R : T 33 $\frac{1}{3}$ : 66 $\frac{2}{3}$ ;
beim dritten Spiegel 50 : 50 und
der vierte und letzte Spiegel weist eine Reflektion
von praktisch loo auf, d.h., daß das gesamte, auf
ihn fallende Licht reflektiert wird; er ist also
kein teildurchlässiger Spiegel.

Eine alternative Möglichkeit der Ausgestaltung des
optischen Systemes besteht darin, das optische
System als Lichtleiter auszuführen. Der Lichtleiter hat dabei eine im wesentlichen kreisförmige
Fläche für den Lichteintritt und ist in eine
Mehrzahl von gleich großen Lichtaustrittsflächen
aufgeteilt. Die Summe der Querschnitte der Lichtaustrittsflächen ist dabei gleich der Lichteintrittsfläche. Als Lichtleiter kann dabei sowohl
ein Glasfaserkabel als auch ein Lichtleiter aus
Kunststoff, beispielsweise aus Polymethacrylsäureestern eingesetzt werden. Die Verwendung von Glasfaserkabeln gestattet eine sehr einfache Aufteilung auf die verschiedenen Lichtaustrittsflächen
und weist den weiteren entscheidenden Vorteil auf,
daß Glasfasern sehr biegsam sind und somit auch
eine Umlenkung des Lichtes in beliebige Winkel gestatten. Ein weiterer Vorteil liegt darin, daß die
Lichtaustrittsfläche beliebig geformt sein kann,
d.h., daß es mit nur geringem Aufwand möglich ist,
die vorteilhafte Ausgestaltung der Lichtaustrittsfläche als Ellipse durchzuführen.

Aus Kunststoff bestehende Lichtleiter weisen demgegenüber den Vorteil der größeren Preisgünstigkeit auf, d.h., daß sie aus einem einzigen Preßstück bestehen können. Diese massiven Lichtleiter
sind nicht wie die Glasfaserstränge biegsam, daher

0088230

ist es möglich, die Längsachsen der Ellipsen der Austrittsflächen ohne zusätzliche Hilfsmittel, wie sie bei den Glasfasern erforderlich sind, zueinander um einen Winkel $\alpha$ zu versetzen. Dieser Winkel $\alpha$ liegt zwischen 1o und 6o Grad. Er ergibt sich durch die geforderte Genauigkeit bei der Fehlererfassung. Je kleiner der Winkel, desto größer ist die Anzahl der erforderlichen elliptischen Lichtaustrittsflächen, die auf das Polygon gerichtet sind.

Die Lichtaustrittsflächen der Lichtleiter liefern jedoch noch kein gerichtetes Licht, so daß im Anschluß an sie noch ein Linsensystem eingesetzt werden muß. Zweckmäßig können dazu Doppelkondensoren eingesetzt werden, die ein prallel ausgerichtetes Licht ergeben.

Gemäß einer bevorzugten Ausgestaltung der Erfindung ist jede parallel zur Rotationsachse des Polygons verlaufende Fläche des Polygons in Segmente unterteilt, von denen mindestens eines ein Spiegelsegment ist. Dabei entspricht die Anzahl der Segmente pro Fläche der Anzahl der Lichtaustrittsflächen des Lichtleiters, bzw. der Anzahl der abgeteilten Strahlen. Vorzugsweise ist nur ein Segment jeder Polygonfläche verspiegelt. Die Polygonflächen als solche sind Rechtecke. Werden diese Rechtecke in kleinere Rechtecke unterteilt, deren Zahl der Anzahl der abgeteilten Strahlen, bzw. der Lichtaustrittsflächen entspricht, so ist es möglich, mit einem einzigen Polygon nacheinander jede der um die Längsachsen zueinander um einen Winkel versetzten, verstreckten Lichtflecke über das zu prüfende Gut zu bewegen. Die verstreckten Lichtflecke werden dabei kontinuierlich gleichzeitig auf das Polygon projiziert. Da sie jedoch nebeneinander angeordnet sind, trifft immer nur ein Fleck auf einen verspiegelten Teil der Polygonfläche, d.h., daß auch nur ein Lichtfleck über das zu prüfende Werkstück geführt wird. Wird mit einer Vielzahl von Lichtflecken abgetastet, so vergrößern sich die Dimensionen des Polygons. In diesem Fall kann es erforderlich werden, daß die verspiegelten Teile des Polygons gegenüber der Längsachse unter einen Winkel angeordnet werden müssen, um den Abstand der Lichtflecken voneinander auszugleichen.

Die Erfindung wird nachstehend an Hand der Zeichnungen erläutert:

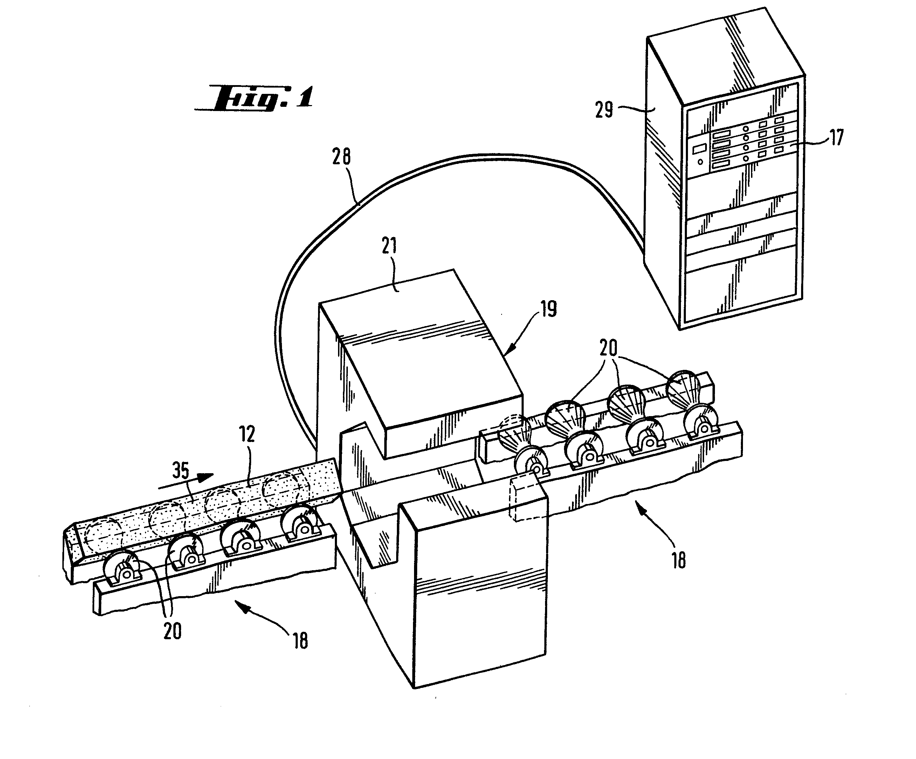

Fig. 1 zeigt in schematischer Darstellung eine Rollenbahn mit darin integrierter Prüfvorrichtung;

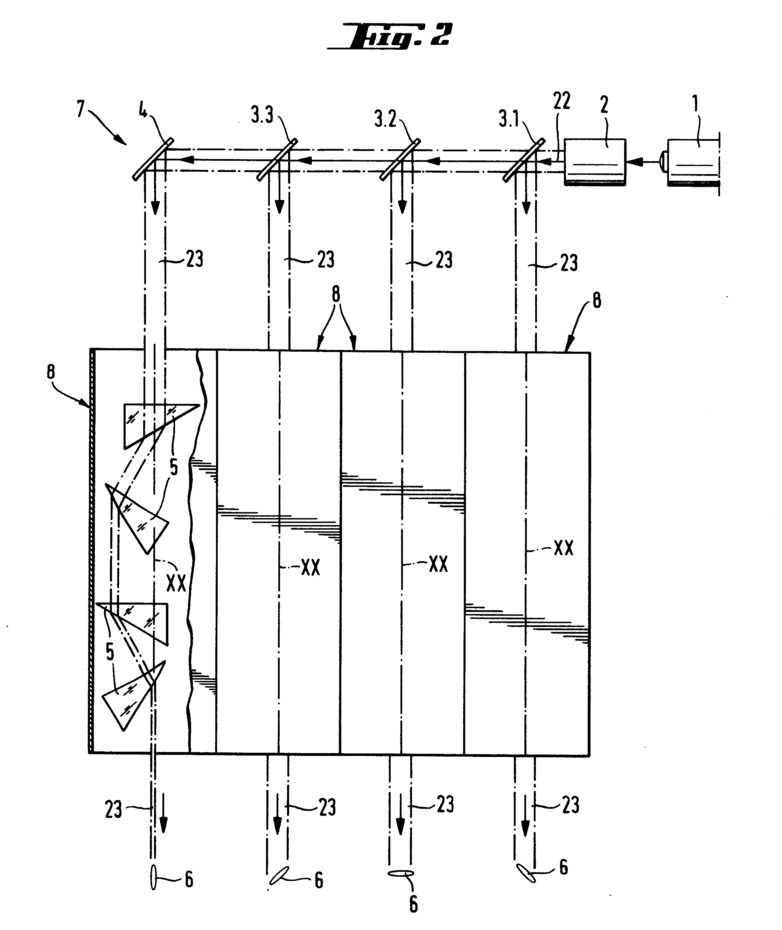

Fig. 2 zeigt die Aufweitung und Verstreckung des Lichtfleckes;

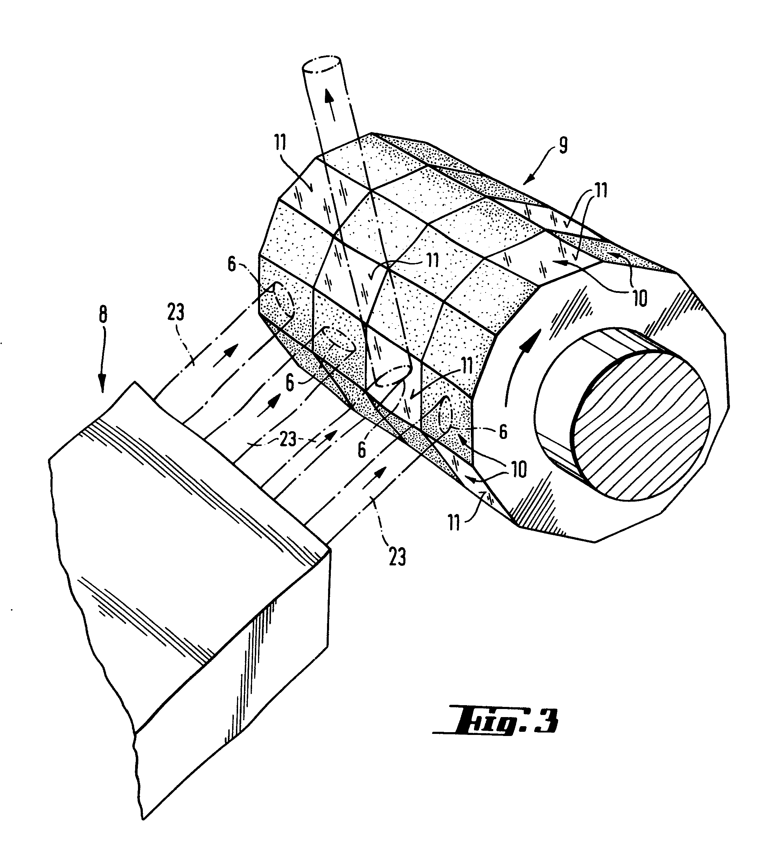

Fig. 3 die Zuordnung der verstreckten Lichtflecken zum umlaufenden Polygon;

Fig. 4 den Verlauf der Lichtstrahlen vom Polygon zum Werkstück;

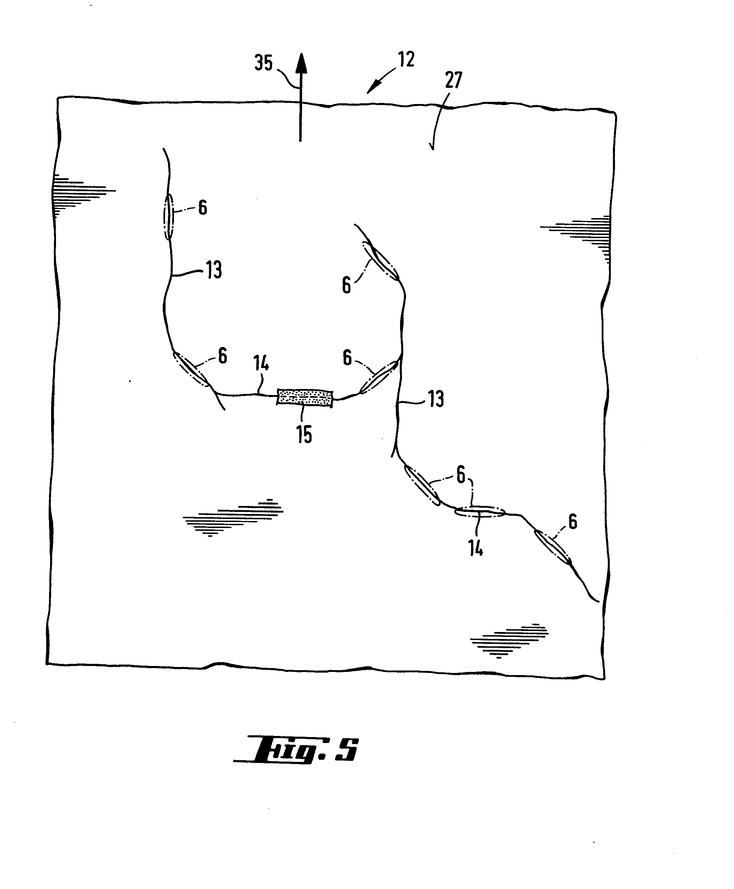

Fig. 5 eine Fehlerstelle in einem Stahlknüppel,

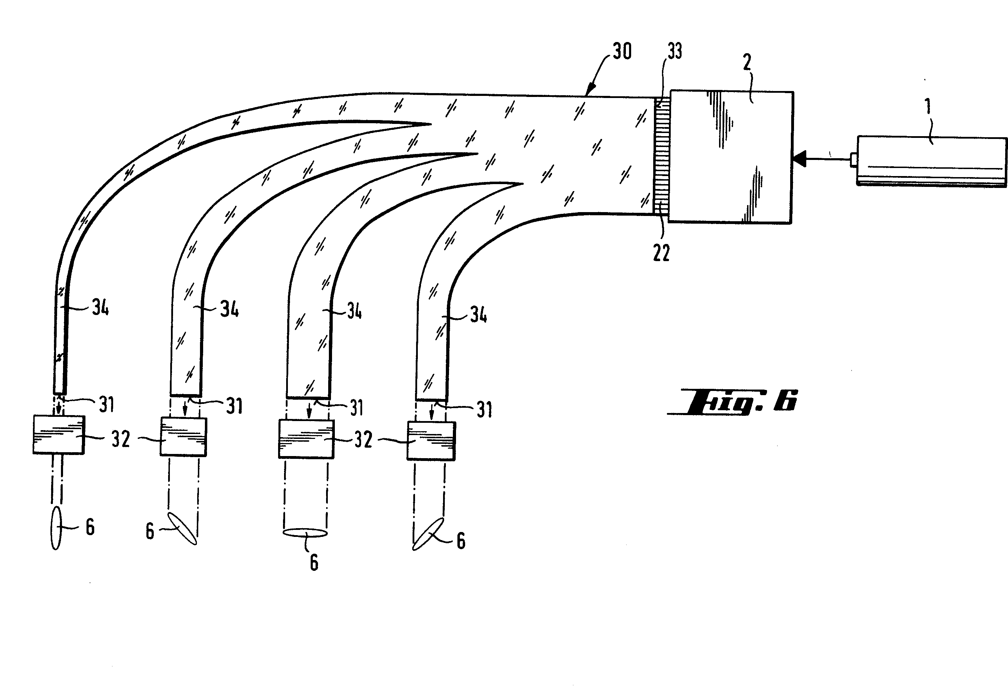

Fig. 6 einen Lichtleiter und -teiler.

Die Stahlknüppel 12 werden über eine Rollenbahn 18 in Richtung 35 durch die Prüfvorrichtung 19 gefördert. Die Rollen sind dabei als Prismarollen 2o ausgeführt, d.h., daß die Stahlknüppel 12 im Spießkant gefördert werden, wodurch eine definierte Position erreicht wird. Der Prüfvorrichtung 19 ist eine nicht dargestellte Vorrichtung vorgeschaltet, in der die Stahlknüppel 12 durch ein Magnetfeld geführt

0088230

und mit Magnetpulver besprüht werden. An den Stellen, wo sich ein Längsriß 13 oder ein Querriß 14 befindet, bildet sich auf dem Stahlknüppel 12 eine Pulverraupe 15, die in der Prüfvorrichtung 19 durch Abtastung erfaßt wird. Die Prüfvorrichtung 19 besteht aus einem Gehäuse 21, in das ein Laserstrahler 1 integriert ist. Dem Laserstrahler 1 nachgeschaltet ist eine Aufweitungsoptik 2, die den Laserstrahl auf ca. 8 mm Durchmesser aufweitet. Dieser aufgeweitete Strahl 22 fällt auf teildurchlässige Spiegel 3.1; 3.2; 3.3 . Der erste teildurchlässige Spiegel 3.1 hat dabei ein Verhältnis von Reflektion zu Transmission von 25 : 75, d.h., daß 25% des aufgebrachten Lichtes hier um 9o Grad umgelenkt werden, während 75% den Spiegel passieren. Diese 75% fallen auf den teildurchlässigen Spiegel 3.2, der ein Verhältnis Reflektion zu Transmission von 33 $\frac{1}{3}$ : 66 $\frac{2}{3}$ aufweist. Ein Drittel des auffallenden Lichtes wird also hier um 9o Grad abgelenkt, während zwei Drittel den teildurchlässigen Spiegel 3.2 passieren und auf den teildurchlässigen Spiegel 3.3 treffen. Dieser teildurchlässige Spiegel hat ein Verhältnis R : T von 5o : 5o, läßt also 50% des ihn treffenden Lichtes durch und reflektiert 50% im Winkel von 9o Grad. Der letzte Spiegel 4 ist ein undurchlässiger Spiegel, d.h., er reflektiert 1oo% des auf ihn auffallenden Lichtes Durch diese sich im Strahlenteiler 7 befindenden Spiegel 3.1; 3.2; 3.3; 4 erfolgt eine Aufteilung des Laserstrahles 22 in vier Teilstrahlen 23, die gleiche Lichtintensität und gleichen Strahldurchmesser aufweisen. Diese Teilstrahlen 23 werden in der Verstreckungsoptik 8, die aus mehreren, hintereinander geschalteten Prismen 5 besteht, so verstreckt, daß sich ein elliptischer Lichtfleck ergibt, dessen längste Seite einen Durchmesser D von 8 mm aufweist, damit dem Durchmesser des aufgeweiteten Laserstrahles 22 entspricht und dessen Schmalseite einen Durchmesser von d aufweist, wobei d 1,5 mm beträgt.

Für jeden Teilstrahl 23 ist eine eigene Verstreckungsoptik 8 vorgesehen, wobei diese Verstreckungsoptiken 8 gegeneinander um ihre optische Achse XX gedreht sind, wobei diese Drehung von der einen Verstreckungsoptik 8 zur anderen Verstreckungsoptik 8 einen Winkel von 45 Grad bildet. Daraus resultiert, daß die von den vier Teilstrahlen 23 erhaltenen elliptisch verstreckten Lichtflecke 6 mit ihren Längsachsen zueinander um 45 Grad unterschiedliche Winkel aufweisen.

Statt der vorbeschriebenen Aufteilung des aufgeweiteten Lichtstrahles 22, kann im Anschluß an die Aufweitungsoptik 2 auch ein Lichtleiter 3o eingesetzt werden, der eine runde Lichteintrittsfläche 33 aufweist, deren Durchmesser mit dem Durchmesser des aufgeweiteten Laserstrahles 22 identisch ist. Der Lichtleiter 3o teilt sich in 4 Lichtleitbögen 34 gleichen Querschnitts auf, die in Lichtaustrittsflächen 31 münden. Die Summe des Flächeninhalts der Lichtaustrittsflächen 31 ist dabei gleich der Lichteintrittsfläche 33. Den Lichtaustrittsflächen 31 ist ein Linsensystem 32 nachgeschaltet, das das austretende Licht parallel richtet und auf das Polygon 9 projiziert.

Die elliptisch verstreckten Lichtflecke 6 werden auf das Polygon 9 projiziert und treffen auf eine Polygongläche 1o auf. Sie werden auf dieser Polygonfläche 1o in einer Reihe abgebildet. Die Polygon-

0088230

fläche lo ist aber in lediglich einem Bereich verspiegelt, d.h. daß nur einer der elliptisch verstreckten Lichtflecke 6 auf ein Spiegelsegment 11
trifft und von diesem Spiegelsegment 11 in Richtung
des zu prüfenden Stahlknüppels 12 abgelenkt wird.
Mit der drehung des Polygon 9 kommt die nächst
Polygonfläche lo in den Bereich der Teilstrahlen 23,
wobei sich diese Polygonfläche lo von der vorhergehenden dadurch unterscheidet, daß das Spiegelsegment
11 auf ihr gegenüber dem vorhergehenden versetzt
angeordnet ist. Durch diese versetzte Anordnung
kommt der nächste Teilstrahl - aber wiederum nur
ein Teilstrahl - als elliptisch verstreckter Lichtfleck 6 auf dem Spiegelsegment 11 zur Abbildung und
wird von diesem in Richtung der Stahlknüppel 12
abgelenkt.

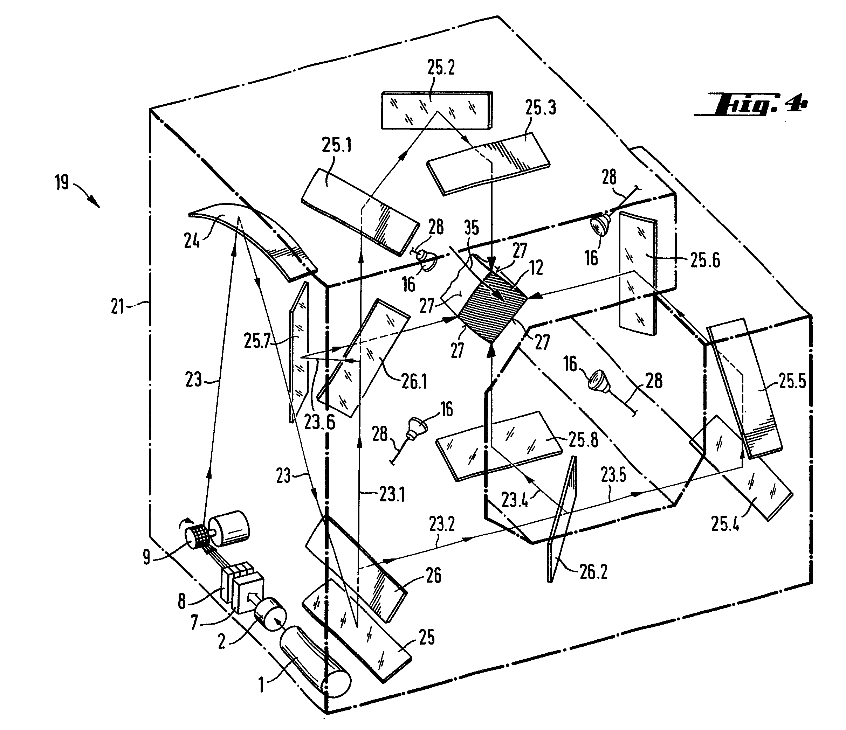

Wie in Fig. 4 dargestellt, trifft der Teilstrahl 23
dabei zunächst auf den Parabolspiegel 24, der ihn
auf den Umlenkspiegel 25 reflektiert. Von diesem
Umlenkspiegel 25 wird der Teilstrahl 23 auf einen
teildurchlässigen Spiegel 26 geworfen. Dieser teildurchlässige Spiegel 26 hat ein Verhältnis R : T
von 5o : 5o, d.h., er teilt den Teilstrahl 23
gleichmäßig in den durchgehenden Strahl 23.1 und
den reflektierten Strahl 23.2 auf. Der durchgehende Strahl 23.1 passiert einen weiteren teildurchlässigen Spiegel 26.1, verliert hier erneut die
Hälfte seiner Lichtintensität, die jetzt nur noch
$\frac{1}{4}$ der ursprünglichen Intensität des Teilstrahls 23
ist, fällt auf den Umlenkspiegel 25.1, von diesem
auf den Umlenkspiegel 25.2 und wird dann über den
Umlenkspiegel 25.3 auf den Stahlknüppel 12 geworfen.

Der vom teildurchlässigen Spiegel 26 reflektierte
Strahl 23.2 fällt auf einen weiteren teildurch-

0088230

lässigen Spiegel 26.2, wo er in den durchgehenden Strahl 23.5 und den reflektierten Strahl 23.4 zerlegt wird. Der durchgehende Strahl 23.5 erreicht den Umlenkspiegel 25.4 und von diesem über die Umlenkspiegel 25.5 und 25.6 den Stahlknüppel 12. Der vom teildurchlässigen Spiegel 26.1 reflketierte Strahl 23.6 gelangt über den Umlenkspiegel 25.7 auf den Stahlknüppel 12, der durch den teildurchlässigen Spiegel 26.2 reflketierte Strahl 23.4 fällt auf den Umlenkspiegel 25.8 und gelangt von diesem auf den Stahlknüppel 12.

Der spießkantgeführte Stahlknüppel 12 wird also bei einem Abtastzyklus voll umfahren, wobei auf Grund der Spiegelstellungen jeweils zwei Flächen von einem Spiegel erfaßt werden. Jeder Knüppelfläche 27 ist dabei ein fotoelektrischer Wandler 16 zugeordnet, der als Fotomultiplier ausgeführt ist. Jeder der vier fotoelektrischen Wandler 16 ist über Kabel 28 mit der Auswertestufe 17 verbunden, die in einem neben der Rollenbahn 18 angeordneten Schaltschrank 29 untergebracht ist.

0088230

Patentansprüche.

1. Verfahren zum Prüfen von ferromagnetischen Werkstücken, insbesondere Stahlknüppeln, auf Risse sowie Einschlüsse mittels eines fliegenden Lichtpunktes, wobei auf die zu prüfenden Werkstücke ein mit einem fluoreszierenden Farbzusatz versehenes Magnetpulver so aufgetragen ist, daß dieses an den Stellen der Werkstücke, die Risse und/oder Einschlüsse aufweisen, Pulverraupen bildet, die bei der Abtastung mit dem fliegenden Lichtpunkt ein fluoreszierendes Licht aussenden, das über mindestens einen fotoelektrischen Wandler empfangen, in Impulse übersetzt und einer Auswertestufe zugeführt wird, gekennzeichnet durch die Kombination folgender Merkmale:
Der zur Abtastung benutzte Lichtfleck ist ellipsenförmig verstreckt,

die Verstreckungsrichtung des Lichtfleckes verläuft während eines Abtastzyklus des Stahlknüppels unter einem konstanten Winkel $\alpha$ , zu dessen Längsachse,

der Winkel $\alpha$ wird vor jedem Abtastzyklus in einer diesem vorgeschalteten Dunkelphase auf einen anderen Wert eingestellt,

die sich aus der Abtastung im fotoelektrischen Wandler ergebenden Analogsignale werden in der Auswertestufe

a) rechnerisch untersucht,

b) einer Schwellwertstufe zugeführt und digitalisiert,

c) die Position in X und Y-Achse festgehalten,

d) in einen Speicher eingeschrieben,

e) ausgewertet.

2. Verfahren nach Anspruch 1, dadurch gekennzeichnet, daß der Winkel $\alpha$ vor jedem Abtastzyklus um 1o bis 6o Grad weitergeschaltet wird.

3. Verfahren nach einem der Ansprüche 1 und 2, dadurch gekennzeichnet, daß die Amplitudenhöhe der Analogsignale rechnerisch untersucht und der Maximalwert festgehalten wird.

4. Verfahren nach einem der Ansprüche 1 bis 3, dadurch gekennzeichnet, daß der Speicher von einer mikroprozessorgesteuerten Elektronik rasterförmig ausgelesen wird.

5. Verfahren nach einem der Ansprüche 1 bis 4, dadurch gekennzeichnet, daß die ermittelte Fehlerlänge oder -fläche mit freiwählbaren Parametern verglichen wird.

6. Verfahren nach einem der Ansprüche 1 bis 5, dadurch gekennzeichnet, daß die Signale über Relaiskontakte zur weiteren Verarbeitung des Werkstückes ausgegeben werden.

7. Vorrichtung zur Durchführung des Verfahrens nach einem der Ansprüche 1 bis 6, bestehend aus

einer Lichtquelle, insbesondere einem Laser-strahler (1), zur Erzeugung eines parallelen Lichtstrahles mit kleinem Durchmesser und hoher Energie,

einem rotierenden Polygon (9) zur Ablenkung des Lichtstrahles über die zu prüfenden Werkstücke,

einem fotoelektrischen Wandler (16) zur Aufnahme des von den Werkstücken reflektierten Lichtes und Umwandlung dieses Lichtes in elektrische Impulse,

sowie einer Auswertestufe (17) zur Untersuchung, Aufschlüsselung und dem Vergleich der erhaltenen Signale mit vorgegebenen Werten, dadurch gekennzeichnet: daß zwischen der Lichtquelle und dem rotierenden Polygon (9) ein optisches System zur Aufteilung und Verstreckung des Lichtstrahles angeordnet ist.

8. Vorrichtung nach Anspruch 7, dadurch gekennzeichnet, daß das optische System aus hintereinandergeschalteten teildurchlässigen Spiegeln (3.1; 3.2; 3.3) zur Strahlaufteilung besteht und jedem Spiegel (3.1; 3.2; 3.3) mindestens ein Prisma (5) zur Längsverstreckung des durch den Strahl gebildeten Abtastlichtfleckes (6) zugeordnet ist.

9. Vorrichtung nach einem der Ansprüche 7 und 8, dadurch gekennzeichnet, daß die Prismen (5) des optischen Systems zueinander um einen Winkel versetzt sind.

10. Vorrichtung nach Anspruch 7, dadurch gekennzeichnet, daß das optische System ein Lichtleiter ist, der eine im wesentlichen kreisförmige Fläche für den Lichteintritt aufweist,

in eine Mehrzahl von gleich großen Flächen für den Lichtaustritt unterteilt ist, wobei die Summe der Querschnitte der Lichtaustrittsflächen gleich der Lichteintrittsfläche ist.

11. Vorrichtung nach Anspruch 1o, dadurch gekennzeichnet, daß die Lichtaustrittsflächen Ellipsen sind.

12. Vorrichtung nach einem der Ansprüche 7 bis 11, dadurch gekennzeichnet, daß jede parallel zur Rotationsachse des Polygons (9) verlaufende Fläche (1o) in Segmente unterteilt ist, von denen mindestens eines ein Spiegelsegment 11 ist.

13. Vorrichtung nach einem der Ansprüche 7 bis 12, dadurch gekennzeichnet, daß die Anzahl der Segmente pro Fläche der Anzahl der Lichtaustrittsflächen entspricht.

**Fig.1**

**Fig. 2**

**Fig. 3**

Fig. 4

0088230

**Fig. 5**

Fig. 6